# EUROPEAN PATENT APPLICATION

(11) **EP 4 459 252 A1**
(43) Date of publication of application: **06.11.2024**
(21) Application number: 22916904.0
(22) Date of filing: 23.12.2022
(51) Int. Cl.: G01K 11/20, B82Y 20/00

(54) **METHOD FOR UTLTRA-LOCAL OPTICAL TEMPERATURE MEASUREMENT**

(30) Priority: 27.12.2021 RU 2021139131
(71) Applicant: NanThermix SA, Lausanne, 1015 (CH)
(72) Inventor: TSEEB, Vadim Egonovich, g. Sochi, pos. Golovinka, 354202 (RU); ROMSHIN, Aleksei Maksimovich, g. Khimki, 141501 (RU); VLASOV, Igor Ivanovich, Moscow, pos. Moskovskiy, 119618 (RU)
(74) Representative: Jeck, Jonathan
(86) International application number: PCT/RU2022/050409
(87) International publication number: WO 2023/128834

(57) **Abstract**

The invention relates to the field of nanotechnology and thermometry and can be used to measure nanoscale ultralocal temperature fields in biomedicine, biotechnology, and microelectronics.

The declared method of ultralocal optical temperature measurement is based on the excitation of luminescence of the impurity centers of a diamond particle.

The declared method, device and nanodiamond probe of the device can be widely used as a precision device that allows for accurate control of heat flows and temperature measurement in nanoscale volumes of living cells, as well as in microelectronics when measuring the thermal conductivity of integrated cir-cuit elements.

## Description

Method for ultralocal optical temperature measurement, device for its implementation, and nanodiamond probe of the device.

### Technical field

The invention relates to the field of nanotechnology and thermometry and can be used to measure local and ultralocal temperature fields with nanoresolution in biomedicine, biotechnology, and microelectronics.

Sensitive scanning of temperature changes on a nanometer scale is a ma-jor issue in many areas of modern science and technology.

### Background of the invention

The capability to monitor temperature values with 1 °C accuracy over a wide temper-ature range can provide an accurate understanding of both organic and inorganic systems, allowing one to identify and track both, metabolism of processes in a living cell and thermal dissipation in inte-grated circuits. The problems in the background that arise when measur-ing local, micron-sized temperature fields are disclosed, for example, in [1], and ultralocal (from 1 to 1000 nm) temperature fields, [2]. These problems are solved by specialists mostly using nanodiamonds.

A method for quantum temperature measurement at nanometer scale is known, disclosed in a patent document [3].

This method of quantum temperature measurement is based on coherent manipulation of the electron spin of nitrogen-vacancy (NV) centers in di-amond particles, on determining the temperature-dependent transition energy between the electron spin sublevels of NV centers in zero magnet-ic field using the fluorescence signal of NV centers.

The nanometer-scale quantum thermometer [3] for implementing this method contains diamond particles as the active material, placed in the medium under study, each containing at least one nitrogen-vacancy (NV) center. The fine structure splitting of the NV center's ground electronic state, which depends on temperature through its spin sublevels, is uti-lized. It includes a laser source for exciting NV center lumines-cence, a microwave generator for controlled manipulation of the electronic spin state, and a photodetector for luminescence detection.

This nanometer-scale quantum thermometer provides excellent sensitivi-ty to tem-perature changes (down to sub-milli-Kelvin units) at micro- and nano-distances due to the high sensitivity of the transition energy be-tween the spin sublevels of NV-centers to temperature changes, is biolog-ically compatible, provides good tempera-ture sensitivity and reproduci-bility with a decrease in measurement time and can be used to study heat-forming intracellular metabolic and genetic processes. However, a large number of diamond nanoparticles migrating within a liquid medium are used to determine temperature in this quantum thermometer, which results in the inability to control their placement at a specific point.

Unlike the claimed method and device for ultralocal optical temperature measurement, the known method and the quantum thermometer in [3] fail to solve the following issues:
- to precisely position the thermometer in space, as its positioning is lim-ited by the transverse size of the focused laser beam, typically 200-300 nm;
- to operate in a gaseous medium (requires a liquid medium or substrate);
- to calibrate the particle that will be directly involved in temperature measurements due to the presence of a large ensemble of diamond parti-cles. As a result, due to differences in transition energies between spin sublevels at the same temperature for different particles, the error in measuring the absolute temperature in this method can reach 3-50°C [4].
- to exclude uncontrolled heating of the volume under study by MW-radiation, which leads to a decrease in the reliability of temperature de-termination.

The closest to the claimed method is the method described in [5], in which laser radiation with a wavelength of 532 nm through a fiber ex-cites the luminescence of GeV-centers in a diamond fixed at the end of the optical fiber, using a diffraction grating and a photodetector, the lu-minescence spectrum is measured, the position of the maximum of the zero-phonon luminescence line is determined, which monotonically dis-places to a long the wave region increases with temperature, and the tempera-ture value is determined in accordance with the calibration curve.

The closest to the claimed device for optical temperature measurement is an optical thermometer, known from [5]. The specified optical thermom-eter contains as an active element a micro- and submillimeter-sized dia-mond containing at least one GeV-center, the position of the zero-phonon line of which depends on temperature and shifts to the long-wavelength region as it increases; an optical fiber to the end of which a diamond is attached; a laser source for exciting luminescence in GeV-centers; photodetector for registration of fluorescence.

The principal disadvantages of the method and the optical thermometer, known from [5], include: 1) the use of large diamond crystals (4 µm or more), not allowing to detect the local temperature at nanometer and submicron scales, 2) the use of optical fiber as a flexible holder of dia-mond microparticles, which does not allow precision movement of the thermometer in space, 3) fluctuations in the optical fiber end lead to re-duced accuracy of temperature determination.

Compact thermocouples known as probes for measuring temperature [6], [7] determine temperature by measuring the potential difference across thermoelectrodes placed in the medium under study.

Nevertheless, the compact size of the probes does not provide ultralocali-ty of temperature measurement.

A diamond probe is known, designed as a flexible holder (optical fiber) for diamond particles, with a diamond placed at its end [5]. However, the specified probe does not allow precision movement of the thermometer in space, and the diamond used in it does not provide ultralocality of measurements.

"The device closest to the claimed nanodiamond probe for optical tem-perature measurement is known from [1], designed as a micropipette filled with a solution (organic solvent - dimethyl sulfoxide, hereinafter - DMSO) of the thermosensitive fluorescent dye Europium-TTA (hereinaf-ter - Eu-TTA), which exhibits temperature-dependent phosphorescence intensity at a wavelength of 615 nm [1].

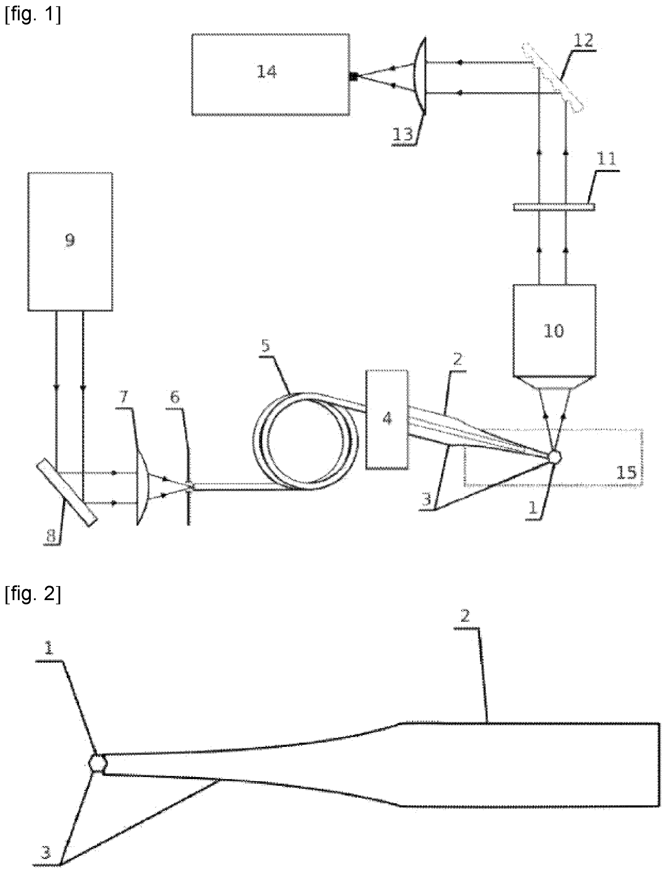

The micropipette thermometer used as a probe for optical temperature measurement and filled with an Eu-TTA thermosensor has the following drawbacks:
- even with a high concentration of Eu-TTA (50mM) in DMSO solution, photo-bleaching (decrease in fluorescence intensity over time under the action of exciting radiation) at the tip of the micropipette is significant even with fast measurement protocols (tens of seconds). In this case, the preliminary temperature calibration of the thermosensor does not ensure high accuracy of temperature measurements during the experiment. In the example given in [1, fig. 2], the accuracy of temperature determina-tion was at the level of 2 °C;
- the presence of liquid (DMSO) inside the pipette is another inevitable factor contributing to the ambiguity of temperature measurements, since convection flows occur in DMSO throughout the length of the pipette when measuring the local temperature distribution taken from the micron tip of the pipette. The immobility of the pipette does not mean the im-mobility (on a micron scale) of the thermosensor itself due to convection currents.

### Abstract of the invention

The claimed group of inventions provides the ability to measure temper-ature at any given point of the medium under study with a spatial resolu-tion of 1-1000 nm, ensures the accuracy of determining temperature <0.1 ° C in the nanometer (1-1000 nm) range, and carries out the study of liquid and gaseous media. Moreover, the capability for ultralocal measurements does not restrict measurement options in micron and submillimeter ranges.

### Technical task

The key task of the claimed group of inventions aimed at solving the above problems is to develop a method, device and nanodiamond probe that make possible precision mapping of temperature gradients at the ul-tralocal level.

The technical result of the claimed inventions is to enhance accuracy of optical ul-tralocal temperature measurement in the nanometer range and to enable precision temperature mapping of the media under study at specified points.

### Task solution

The technical result is achieved by the fact that a known method of opti-cal temperature measurement based on excitation of luminescence of im-purity centers of a dia-mond particle, registration of the luminescence spectrum of a diamond particle, pre-calibration of a diamond particle ac-cording to temperature and the position of the maximum of the zero-phonon luminescence line of a diamond particle, determination of tem-perature in the medium under study using pre-calibration data, addition-ally includes the selection of a diamond particle nanometer size and placement of a dia-mond particle in the end face of a nanodiamond probe installed in a micromanipulator to ensure precise placement of a nanodi-amond probe at a given point of the medium under study to determine its temperature, the luminescence of impurity centers in a diamond particle of a nanodiamond probe is externally-excited, and the spectral posi-tion of the maximum of the zero-phonon luminescence line is extracted from the recorded luminescence spectrum of the diamond particle, according to which, based on preliminary calibration data of the diamond particle, the temperature values are determined at a specified point.

It is preferable to choose a diamond particle containing at least one sili-con vacancy impurity center (SiV).

The initial calibration of the diamond particle of the nanodiamond probe can be conducted in a thermostat.

It is preferable to excite the luminescence of impurity SiV-centers in a diamond parti-cle of a nanodiamond probe by focusing laser radiation at a wavelength from 450 to 738 nm and with a power from 100 µW to 10 mW.

The optimal choice is to select a diamond particle with a size ranging from 50 to 1000 nm.

The technical result is further achieved by the known device for localized optical temperature measurement, which implements the method, com-prising a diamond parti-cle, a laser radiation unit for exciting the lumines-cence of the impurity centers of the diamond particle, and a luminescence registration unit. Additionally, the device contains a micromanipulator made with the capability of linear movement, and a nanodi-amond probe with a pre-calibrated diamond particle of nanometer size located at the end of the nanodiamond probe. Herewith, the nanodiamond probe is in-stalled in a micromanipulator enabling its precision placement in the me-dium under study.

The laser radiation unit contains an optically connected and sequentially mounted laser, mirror, lens, diaphragm and optical fiber connected to a nanodiamond probe in one of its configurations.

In its optimal configuration a luminescence detection unit comprises op-tically interconnected and sequentially arranged components: an optical filter, diffraction grating, lens, and a photodetector. Also, the laser radiation unit in its most effective configuration can emit and transmit light in the wavelength range from 450 to 738 nm.

It is preferable to employ a micromanipulator with the option of linear movement in three mutually perpendicular directions.

A diamond particle may comprise at least one silicon vacancy impurity center (SiV). [38] It is preferable to use a diamond particle of nanometer size from 50 to 1000 nm, which does not limit other embodiments in which particle sizes can be selected from 1 to 50 nm.

The technical achievement is further realized through the incorporation of a nanodi-amond probe designed for use in the device. The probe in-cludes a glass capillary housing active particles, with a pre-calibrated di-amond nanoparticle selected as the active agent and positioned at the ca-pillary's end.

The glass capillary can preferably be designed as a hollow cylindrical glass container tapering at one end.

The best diameter of the glass capillary (dcapillary) is determined taking into account the size of the embedded diamond particles (ddiamond), in accordance with the expression ddiamond ≤ dcapillary ≤3 • ddiamond.

A diamond particle can be integrated in the tapered end of the glass ca-pillary made of an aqueous suspension with diamond particles. It is preferable to manufacture a glass capillary from borosilicate glass.

### Positive effects of the invention

The principle of operation of the declared group of inventions solving the same problem in the same way is based on the physical dependence of the spectral position of a zero-phonon line on temperature, occuring mainly due to two-phonon elastic scattering in a diamond lattice.

New and unknown in the state of the art is the use in the declared device for the ul-tralocal optical temperature measurement of a micromanipula-tor with a nanodia-mond probe where a pre-calibrated diamond particle containing at least one impurity center is located. Herewith, a microma-nipulator is equipped with a nanodiamond optical probe which is de-signed with the possibility of precision placement in the medium under study.

The declared design of a nanodiamond probe with a single diamond cali-brated parti-cle in the glass capillary end is unknown in the state of the art. The specified design makes it possible to precisely place a nanodia-mond probe at a given point in the medium under study and make accu-rate temperature measurements at a given point.

The main significant difference between the declared device for utralocal optical temperature measurement and a nanodiamond probe for its im-plementation is the use of a single, calibrated diamond nanoparticle and the possibility of its precision positioning at any given point of the me-dium under study. This allows to select nanodiamonds with the best lu-minescent characteristics for a nanodiamond probe, pre-calibrate it and optimize possible systematic errors using model experiments and cal-cu-lations. The new design of the device and the nanodiamond probe as a result of the implementation of the declared method using them may be especially relevant in the study of temperature gradients, presumably oc-curring at nano- and submicron distances with ultra-local emissions in single calcium channels or their families in biological objects.

### Description of the drawings

The declared group of inventions is explained by the following drawings, presented for the purpose of illustration, but not for limitation:
[fig. 1] Fig. 1 schematically demonstrates a device for ultralocal optical temperature measurement, as follows: 1 - diamond particle; 2 - glass ca-pillary; 3 - nanodiamond probe; 4 - micromanipulator; 5 - optical fiber; 6 - aperture; 7 - lens; 8 - mirror; 9 - la-ser; 10 - optical lens; 11 - diaphragm of the registration unit; 12 - diffraction grating; 13 - lens of the registra-tion unit; 14 - photodetector; 15 - the medium under study.
[fig. 2] Fig. 2 demonstrates an image of nanodiamond 1 localized at the end of the glass capillary 2 of the nanodiamond probe 3.
[fig.3] Fig. 3 demonstrates a scheme for embedding diamond particles 1 into a glass capillary 2 from a drop of aqueous suspension 16 on a sub-strate 17.
[fig. 4] Fig. 4 demonstrates the zero-phonon line of the luminescence spectrum of SiV-centers, the maximum intensity value of the zero-phonon line l0 (dotted line), the area of approximation of the zero-phonon line is highlighted in black.
[fig. 5] Fig.5 demonstrates a calibration curve, establishing the relation-ship between the spectral position of the zero-phonon luminescence line of the SiV-centers and the temperature.
[fig. 6] Fig.6 demonstrates a graph of temperature versus time with the time step of 30 seconds. The dotted line indicates the temperature read-ings of the thermocouple.

### Description of implementation options

The declared group of inventions is implemented as follows.

The device for ultralocal optical temperature measurement contains a nanodiamond probe 3, including a diamond particle 1 located at the end of a glass capillary 2. One nanometer-sized diamond particle is selected as diamond particle 1, preferably from 50 to 1000 nm, which does not restrict the use of smaller diamond particles, for example, from 1 to 50 nm. The diamond particle 1 contains luminescent "silicon vacan-cy" color centers (SiV) in a preferred configuration, a laser radiation unit including a laser 9 optically connected to a sequentially arranged mirror 8, lens 7, and diaphragm 6. The diaphragm 6 is optically connected to one end of the optical fiber 5, which passes through the glass capillary 2 of the nanodiamond probe 3 in the direction of a diamond particle 1 located at the end of the glass capillary 2, which is designed in the form of a hollow cylindrical container with one end tapered.

The glass capillary 2 of the nanodiamond probe 3 in the process of local heating is installed in a micromanipulator 4, made with the possibility of its pistonwise movement and installation of the glass capillary 2 in the medium under study, shown in [fig. 1] in the form of a container with the test medium 15. The medium under study 15 may also be liquid or gase-ous. The diamond particle 1, located at the end of the nanodiamond probe 3, is optically connected to a luminescence registration unit, which contains a sequentially mounted optical lens 10, made without immer-sion or water immersion (in case of operation in an aqueous medium 15), a light filter 11, a diffraction grating 12, a lens 13, a photo detector 14, designed, for example, as a sensitive CCD (charge-coupled device) ma-trix.

The laser 9 ([fig. 1]) is designed with the option of excitation of impurity centers (SiV) by radiation at a wavelength lying within a range of 450-738 nm in preferred configurations. The highest luminescence intensity of SiV centers is observed [8] in this wavelength range.

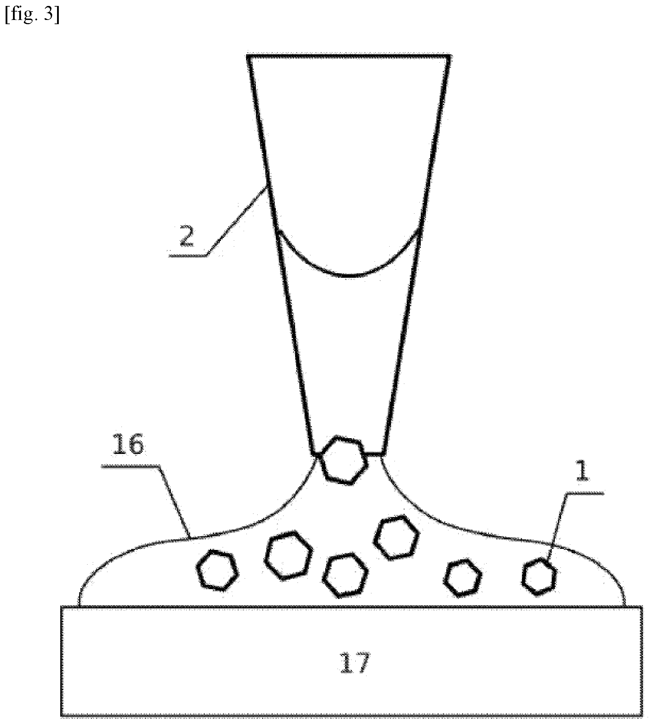

A nanodiamond probe for optical temperature measurement in one of its configurations can be manufactured in the following sequence of opera-tions:
1) Nanometer-sized diamond particles containing at least one SiV center HPHT (High Pressure High Temperature) or CVD (Chemical Vapor Deposition) are synthesized by the method disclosed, for example, in [9].
2) A glass capillary is made of borosilicate glass by pulling and tearing the heated capillary in a micro-diaper (puller): the cylindrical part of the workpiece is systematically stretched and narrowed to form a micro- and nano-sized capillary at the heating point. The diameter of the capillary (dcapillary) is selected considering the size of the diamond crystallites (ddiamond) that will be embedded in it, in accordance with the expres-sion ddiamond ≤ dcapillary ≤ 3 • ddiamond. The diameter of the capil-lary (dcapillary) is selected considering the maximum capillary forces acting on embedded diamond crystallites. The results of experiments helped to define the diameter of the capillary within: ddiamond ≤ dcapil-lary ≤ 3 • ddiamond.
3) The synthesized diamond particles are integrated in a capillary of the appropriate diameter. A drop of water is applied to the substrate 17 with diamond particles for this purpose, the particles dissolve in it, forming an aqueous suspension 16 ([fig.3]). Then, a capillary 2 is brought to the interface of the aqueous and air media at the normal line, and a water column with diamond particles is drawn into its inner channel under the action of capillary forces ([fig.3]). When one of the particles approaches capillary 2, it sticks to its end. A diamond particle may con-sist of one or more crystals that have combined during synthesis or in solution. In one of device configurations, an optical fiber 5 is inserted in-to the wide end of the diamond probe 3, which is led throughout the in-ner wall of the tapering part of the nanodiamond probe 3.

Different designs of the temperature measuring device are possible, for example, to excite luminescence in a diamond particle 1, laser radiation 9 is focused on it using a lens 10 (in this configuration optical fiber 5 is not used). The position of the optical fiber is optimized at a fixed laser pow-er angle by detecting the maximum SiV lumi-nescence signal from a spe-cific diamond particle. The found position of the optical fiber 5 is rigidly fixed and attached to the capillary 2 with epoxy glue.

The declared method of ultralocal optical temperature measurement in the medium under study using an optical temperature measurement de-vice and a nanodiamond probe for its implementation is based on the method of optical temperature meas-urement, which uses the temperature dependence of the spectral position of the maximum of the zero-phonon luminescence line of impurity defects having a narrow spectral width of the zero-phonon luminescence line (<10 nm), for example, silicon vacan-cy (SiV), germanium-vacancy (GeV), nitrogen-vacancy (NV), tin-vacancy (SnV) [10,11].

Temperature measurement with nanometer spatial resolution is per-formed by a single nanodiamond 1, which is fixed at the end of the glass capillary 2 of the nanodia-mond probe 3, which is precisely positioned at a given point in space using a high-precision micromanipulator (hereinaf-ter - MM) 4. The nanodiamond probe 3 is in-stalled in a socket on the head of the piezoelectric MM 4 and is rigidly fixed with a tightening screw (not shown in the drawings). The MM control unit, consisting of a joystick, a displacement controller and software (not shown in the draw-ings), allows precision positioning of the nanodiamond probe at a given point in the medium under study using a high-precision MM 4. Continu-ous or pulsed laser radiation from laser 9, reflecting from mirror 8, pass-es through the lens 7, in the focal plane of which the diaphragm 6 is lo-cated (the aperture of the diaphragm is located at the focal point of the lens 7 on the optical axis), and enters the optical fiber 5, one end of which is inserted into a wide part of the glass capillary channel 2. The radiation released from the optical fiber 5, spreading along the axis of the capillary 2 as through a waveguide, excites the luminescence of SiV-centers in the diamond particle 1, which is collected by an optical lens 10 and directed by it through the diaphragm 11 of the registration unit to the diffraction lattice 12 of the registration unit, which decomposes the luminescent signal into spectral components. The sensitive photodetector 14 registers the luminescence spectrum (hereinafter - CJI) of SiV centers. Different configurations of the device design for optical temperature measurement are possible, for example, in one of the configurations, la-ser radiation 9 is focused on the particle using a lens 10 (in this option to implement of the device, optical fiber 5 is not used) to excite lumines-cence in a diamond particle 1.

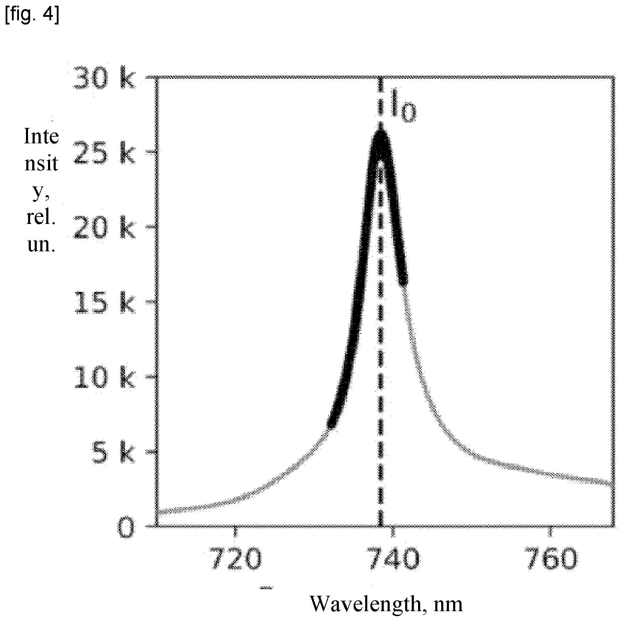

The spectral position of the maximum of the zero-phonon luminescence line is found from the obtained spectrum, following the procedure (here-inafter referred to as the POM):
1) In order to obtain a normalized luminescence spectrum (hereinafter - HCJI), the background spectrum recorded in the same spectral range and at the same point in space is subtracted from the CJI of the SiV-centers in the absence of luminescence of the SiV-centers (with the laser turned off).
2) For HCJI in the spectral range from 730 nm to 750 nm, the maximum intensity value of the zero-phonon luminescence line l0 is determined (the dotted line in [fig.4]).
3) The long-wavelength part of the spectrum lying below the intensity level is excluded from further approximation (in fig. 4 it is depicted as part of the curve in grey to the right of the maximum value l0). This op-eration is necessary to eliminate the influence of the long-wave phonon wing of the zero-phonon line, which can lead to its distortion.
4) The short-wave part of the spectrum lying below the intensity level is excluded from further approximation. Performing this action is neces-sary to exclude the possible influence of additional luminescence sources emitting at a wavelength <738 nm (for example, a small wideband lumi-nescence associated with the possible presence of the sp2 phase of car-bon on the diamond surface (fig. 4 - part of the curve in grey to the left of the maximum value l0).
5) The spectrum obtained as a result of performing a sequence of opera-tions ac-cording to points 1-4 (the black area of the curve in [fig.4]) is ap-proximated by a Lorentz curve, [12]. The value of the spectral position of the zero-phonon luminescence line of the SiV-centers is extracted from the approximation parameters.

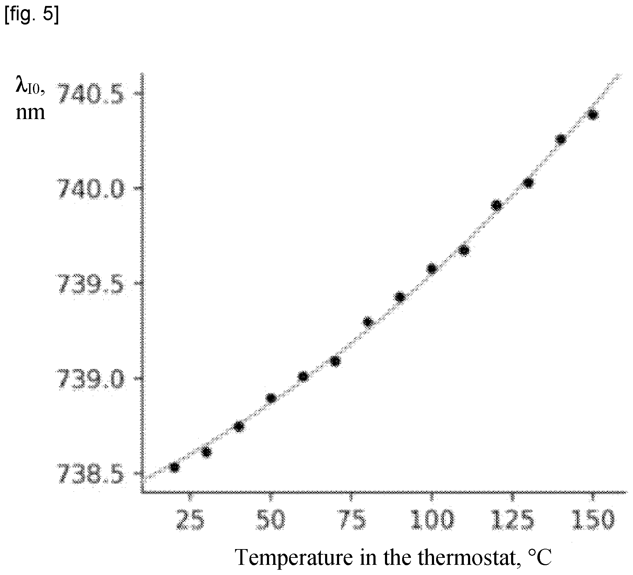

A calibration curve is built, prior to the process of ultralocal temperature measurement depending on the magnitude of the spectral shift of the maximum position of the zero-phonon luminescence line of the SiV-centers contained in a nanometer diamond particle on temperature. For these purposes, the nanodiamond probe 3 is placed in a thermostat, the temperature in which is maintained at a predetermined level and strictly controlled with an accuracy of 0.1 ° C. At each temperature value in the thermostat, the luminescence spectrum of the diamond nanoparticle 1 is measured and the spectral position of the maximum of the zero-phonon luminescence line of the SiV-centers is determined in accordance with the POM. Based on the obtained data an experimental ratio of the spectral position of the zero-phonon line vs temperature (points in [fig.5]) can be built, which is approximated (line in [fig.5]) according to a known ratio [13] and represents a calibration curve.

At the next stage, the calibrated nanodiamond probe 3 is fixed in the socket of the head (not shown in the drawing) of the micromanipulator 4 and precisely positioned at a given point of the medium under study 15, the temperature of which must be determined. Further, the luminescence spectrum of the diamond nanoparticle 1 of probe 3 is measured and the spectral position of the maximum of the zero-phonon luminescence line of the SiV-centers is subsequently determined in accordance with the POM. The spectral position of the zero-phonon line obtained as a result of the POM is uniquely determined by the calibration dependence of the corresponding temperature value.

The spatial resolution in temperature is determined by the size of the lu-minescent nanodiamond in the probe, which can be measured by na-nometers [14]. The positioning accuracy is determined by the technical characteristics of the micromanipulator, namely resolution and precision, which can reach the order of 1 nm.

### Examples

The implementation of the declared group of inventions can be illustrated by the following examples of experimental studies.

### Example 1.

Experimental studies were conducted with diamond nanoparticles con-taining SiV centers, which were synthesized by chemical vapor deposi-tion (CVD) in a microwave reactor on a germanium substrate pre-seeded with HPNT nanodiamonds with an average size of 10 nm to initiate the growth of diamond crystallites. The choice of the substrate is explained by the baseline adhesion between diamond and germanium, which great-ly facilitates the transfer of diamond nanoparticles from the substrate surface to an aqueous medium. The synthesis of diamonds was carried out in a methane (CH4)-hydrogen(H2) gas mixture with the addition of silane (SiH4). The characteristic size of the diamond particles was 300 nm. The embedding of the diamond nanoparticle into the inner channel of the glass capillary was carried out as follows. A drop of distilled wa-ter with a volume of 5 µl was applied to the substrate. Diamond particles were mechanically mixed until formation of an aqueous suspension. The glass capillary was brought to the surface of the drop at the normal line, into the inner channel of which, under the action of capillary forces, a column of water with a diamond nanoparticle was drawn ([fig.3]).

The applied drop of water with a volume of 5 µl, spreading over the substrate, formed a round spot with a radius of r ≈ 2 mm, while the par-ticle concentration was equal to n = 106h/µl, and the effective volume of water containing one particle Veff = 1/n = 106 µl. The volume of the VWater water column penetrating into the capillary was determined ex-perimentally using an optical microscope camera: for a glass capillary Vwater ≈ 1.5* 10-7 µl. As a result, Vwater /Veff = 0.15 << 1, therefore, the probability of several particles entering the capillary at the same time is negligible, and for successful embedding of at least one particle, it is necessary to carry out the procedure of wetting the capillary several times, monitoring the ingress of nanodiamond into it by the signal of flu-orescence of SiV-centers.

The resulting nanodiamond probe was pre-calibrated in a thermostat, the temperature in which was stabilized at a predetermined level with an ac-curacy of 0.1 °C. The temperature in the chamber changed in increments of 10 °C. At each step, the SiV-luminescence spectrum was recorded (see [fig.4]), that is, the dependence of the luminescence intensity on the wavelength. The spectral position of the maximum (center) of the zero-phonon line was determined by approximating the Lorentz curve using the Levenberg-Marquadt method. The dependence of the spectral posi-tion of the center of the zero-phonon line on the temperature set in the thermostat, which was the calibration curve, was built ([fig.5]).

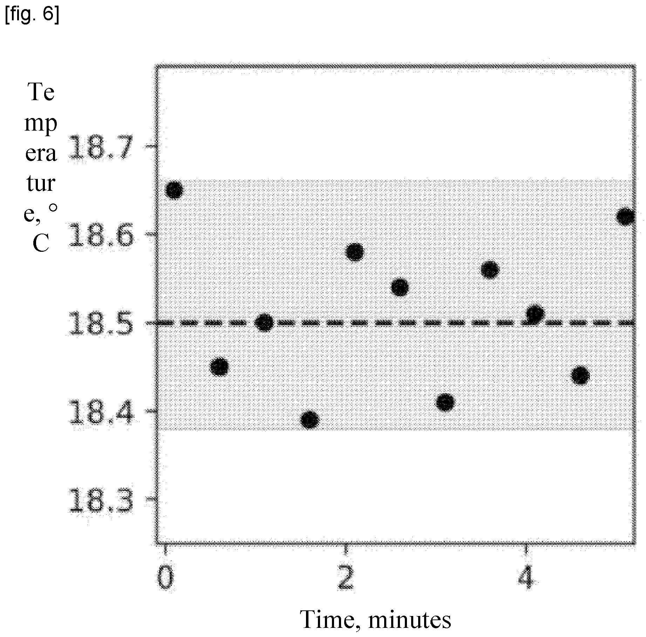

The calibrated nanodiamond probe was placed using a high-precision micromanipulator in the test medium placed in a container filled with 20 ml of distilled water. The temperature of the medium was regulated by the supply of a liquid flow of a set temperature by a temperature control-ler in a wide range - from 15 to 55 ° C. The incoming volume of heated liquid was compensated by pumping out a pump in the less heated part of the cup. The temperature reading was carried out using two independent thermometers in a sensitive thermocouple (head diameter - 1 mm) and a nanodiamond probe. The luminescence of SiV-centers was excited by laser radiation at a wavelength of 532 nm with a power of 100 mW in order to measure the temperature with a nanodiamond probe. The tem-perature in the container with distilled water was fixed at a preset level. The thermocouple measured the temperature of the me-dium under study continuously and its value was 18.5 ° C (dotted line in [fig.6]). Herewith, temperature values were measured using a nanodiamond probe for 1 second with an interval of 30 seconds for 5 minutes ([fig.6]). According to ([fig.6]), a range of values relative to 18.5 °C was obtained within 0.15 °C, and the mean square deviation (measurement error) was +- 0.08 °C, which allows us to conclude that the declared device with a nanodiamond probe is highly accurate.

### Example 2.

The measurements were carried out as in Example 1, but at a tempera-ture of 45 °C of the medium under study. The higher heating temperature caused heat-diffusion fluid flows, leading to temperature fluctuations at the measured point of the aqueous medium. Thereby, the readings of the nanodiamond probe began to fluctuate strongly relative to the readings of the thermocouple, reaching deviations of 6 °C. When temperature equilibrium was reached in the entire volume of the container with water, the mixing of the liquid stopped, the thermocouple showed a tempera-ture value of 45 ° C, and the readings of the nanodiamond probe fluctu-ated slightly depending on this temperature value from measurement to measurement. The measurement accuracy was +- 0.09 ° C.

Studies on this example have shown that the small size of the nanodia-mond probe (300 nm) makes it sensitive to temperature fluctuations on a nanometer scale, whereas the large size of the thermocouple (1 mm) is not sensitive to such fluctuations.

### Example 3.

Measurements were performed as in Example 1, but during the synthesis of diamond nanoparticles, germane (GeH4) was added instead of silane. The resulting nanoparticles contained germanium-vacancy (GeV) impuri-ty defects, luminescent at a wave-length of 602 nm, and the size of the di-amond particle was 1000 nm. The laser power was 10 mW. The meas-urement accuracy was +- 0.05 ° C.

### Example 4.

The measurements were carried out as in Example 1, but laser radiation at a wave-length of 473 nm with a power of 800 mW was used to excite the luminescence of the SiV-centers. The measurement accuracy was +- 0.08 ° C.

### Example 5.

The measurements were carried out as in Example 1, but diamond nano-particles with a size of 100 nm were selected, and laser radiation at a wavelength of 670 nm with a power of 500 mW was used to excite the luminescence of SiV-centers. The measurement accuracy was +- 0.07 ° C.

The conducted experimental studies have shown that, compared with known methods of optical temperature measurement, the declared group of inventions provides higher measurement accuracy at ultralocal scales. Proceeding from the description of the patent document [3], where, using the method of quantum temperature meas-urement on a nanometer scale, the locality of temperature determination is achieved, limited by the transverse dimensions of the focused laser beam, i.e. 200-300 nm, the temperature measurement accuracy was 5 °C.

In the known device [5] for local optical heating with a diamond at the end of an opti-cal fiber, preliminary calibration provided an accuracy of 0.15 °C for a diamond particle with a size of 4 microns, and the use of optical fiber to collect and register photo-luminescence led to a high back-ground signal, which, according to the data given in [5] did not allow working with diamond particles smaller sizes (with a lower intensity of the useful luminescence signal). Therefore, the locality of temperature de-termination (or spatial resolution) was limited by the size of the diamond, i.e. 4 µm.

The known temperature probe in [1] provided locality of temperature determination at the level of 5 microns, which led to an accuracy of 2 °C.

### Industrial applicability

In the declared method and design, the accuracy of temperature determi-nation at 0.1 °C is achieved (as follows from the examples given), and ul-tra-locality is determined by the size of the diamond nanoparticle, which helps to register a useful lumi-nescence signal for temperature determina-tion.

The declared optical diamond nanothermometer can be widely used as a precision device that allows for accurate control of heat flows and tem-perature measurement in nano-sized volumes of living cells, as well as in microelectronics when measuring the thermal conductivity of integrated circuit elements.

### Reference list

1. Zeeb, V., Suzuki, M., & Ishiwata, S. I. A novel method of thermal ac-tivation and temperature measurement in the microscopic region around single living cells. Journal of neuroscience methods, V. 139, p. 69-77, 2004. - [1].
2. Wu, Y., Álam, M. N. A., Balasubramanian, P., Ermakova, A., Fischer, S., Barth, H., Wagner, M., Jelezko, F., & Weil, T. Nanodiamond Theranostic for Light- Controlled Intracellular Heating and Nanoscale Temperature Sensing. Nano Letters, V. 21, p. 3780-3788,2021. - [2]
3. Patent EP2981795B1, cl. G01K 7/32, G01K 11/20, publ. 07/25/18)- [3].
4. Fujiwara, M., Sun, S., Dohms, A., Nishimura, Y., Suto, K., Takezawa, Y., Oshimi, K., Zhao, L., Sadzak, N., Umehara, Y., Teki, Y., Komatsu, N., Benson, O., Shikano, Y., & Kage-Nakadai, E. Real-time nanodia-mond thermometry probing in vivo thermogenic responses. Science advances, V. 6, p. eaba9636, 2020 - [4].
5. Fedotov, I. V., Solotenkov, M. A., Pochechuev, M. S., Ivashkina, O. I., Kilin, S. Y., Anokhin, K. V., & Zheltikov, A. M. All-Optical Brain Thermometry in Freely Moving Animals. ACS Photonics, V. 7, p. 3353-3360, 2020 - [5].
6. Kiyatkin, E. A., Wakabayashi, K. T., & Lenoir, M. Physiological fluctuations in brain temperature as a factor affecting electrochemical evalua-tions of extracellular glutamate and glucose in behavioral experiments. ACS chemical neuroscience, V. 4, p. 652-665, 2013. - [6].
7. Fekete, Z., Csemai, M., Kocsis, K., Horváth, Á. C., Pongrácz, A., & Barthó, P. Simultaneous in vivo recording of local brain temperature and electrophysiological signals with a novel neural probe. Journal of neural engineering, V. 14, p. 034001, 2017 - [7].
8. HáuBler, S., Thiering, G., Dietrich, A., Waasem, N., Teraji, T., Isoya, J., Iwasaki, T., Hatano, M., Jelezko, F., Gali, A., & Kubanek, A. Photo-luminescence excitation spectroscopy of SiV- and GeV- color center in diamond. New Journal of Physics, V. 19, p. 063036, 2017 - [8]
9. Shenderova, O. A., Shames, A. I., Nunn, N. A., Torelli, M. D., Vlasov, I., & Zaitsev, A. Synthesis, properties, and applications of fluorescent diamond particles. Journal of Vacuum Science & Technology B, V. 37, p. 030802, 2019 - [9].
10. Tchemij, S. D., Herzig, T., Fomeris, J., Kupper, J., Pezzagna, S., Traina, P., Morévá, E., Degiovanni, I. P., Brida, G., Skukan, N., Geno-vese, M., M., Jaksic, M., Meijer, J., & Olivero, P. Single-photon-emitting optical centers in diamond fabricated upon Sn implantation. ACS photonics, V. 4, p. 2580-2586, 2017 - [10].
11. Iwasaki, T., Miyamoto, Y., Taniguchi, T., Siyushev, P., Metsch, M. H., Jelezko, F., & Hatano, M. Tin-vacancy quantum emitters in diamond. Physical review letters, V. 119, p. 253601, 2017. (S.D)- [11].
12. Gill, F., Murray, W., & Wright, M. Practical optimization. World. pp. 188, 1985-[12].
13. Jahnke, K. D., Sipahigil, A., Binder, J. M., Doherty, M. W., Metsch, M., Rogers, L. J., Manson, M. B., Lukin, M.D., & Jelezko, F. Electron-phonon processes of the silicon-vacancy centre in diamond. New Journal of Physics, V. 17, p. 043011, 2015-[13].
14. Vlasov, 1.1., Shiryaev, A. A., Rendler, T., Steinert, S., Lee, S. Y., Antonov, D., Vörös, M, Jelezko, F., Fisenko, A. V., Semjonova, L. F., Biskupek, J., Kaiser, U., Lebedev, O. I., Sildos, I., Hemmer, P. R., Konov, V. I., Gáli, A., & Wrachtrup, J. Molecular-sized fluorescent nanodiamonds. Nature nanotechnology, V. 9, p. 54-58, 2014- [14].

## Claims

1. Method of ultralocal optical temperature measurement based on excitation of luminescence of impurity centers in a diamond particle, registration of the luminescence spectrum of the diamond particle, pre-calibration of the diamond particle depending on temperature and position of the zero-phonon line maximum of the luminescence spectrum of the diamond particle, determination of the temperature in the investigated environment using the pre-calibration data, **characterized in that** a nanoscale diamond particle is selected, the diamond particle is placed at the tip of a nano-diamond probe, which is installed in a micromanipulator, with which the nano-diamond probe is precisely positioned at a specified point of the investigated environment to determine its temperature, luminescence of impurity centers in the diamond parti-cle of the nanodiamond probe is excited, and from the registered luminescence spectrum of the diamond particle, the spectral position of the zero-phonon line maximum of the luminescence is extracted, based on which, using pre-calibration data of the diamond particle, the temperature values at the specified point are determined.

2. The method for ultralocal optical temperature measurement according to claim 1, **characterized in** selection of a diamond par-ticle containing at least one silicon-vacancy impurity center (SiV).

3. The method for ultralocal optical temperature measurement according to claim 1, **characterized in** the use of a thermostat for preliminary calibration of a diamond particle of a nanodiamond probe.

4. The method for ultralocal optical temperature measurement according to claim 1, **characterized in** the excitation of luminescence of impurity SiV-centers in a diamond particle of a nanodiamond probe performed by focusing laser radiation at a wave-length from 450 to 738 nm and with a power from 100 mW to 10 mW.

5. The method for ultralocal optical temperature measurement according to claim 1, **characterized in** the use of a diamond particle of nanometer size from 50 to 1000 nm.

6. A ultralocal optical temperature measurement device for implementing the method according to claim 1, comprising a diamond particle, a laser irradiation block for excitation of luminescence of impurity centers in the diamond particle, and a luminescence registration block, **characterized in that** it further comprises a micromanipulator capable of reciprocating movement and a nanodiamond probe in which a diamond particle is installed, wherein the particle is pre-calibrated, placed at the tip of the nanodiamond probe, and has nanoscale dimensions, and the nano-diamond probe is installed in the micromanipulator and designed for precise positioning in the investigated environment.

7. The ultralocal optical temperature measurement device according to claim 6, **characterized in** the configuration of the laser radiation unit with an optically connected and sequentially mounted laser, mirror, lens, diaphragm and optical fiber connected to a nanodiamond probe.

8. The ultralocal optical temperature measurement device according to claim 6, **characterized in** the configuration of the luminescence registration unit with an optically connected and sequential-ly installed light filter, diffraction grating, lens and photodetector.

9. The ultralocal optical temperature measurement device according to claim 6, **characterized in** the laser radiation unit designed to emit and transmit light in the wavelength range from 450 to 738 nm.

10. The ultralocal optical temperature measurement device according to claim 6, **characterized in** the design of the micromanipulator with the option of reciprocating motion in three mutually perpendicular directions.

11. The ultralocal optical temperature measurement device according to claim 6, **characterized in** the diamond particle with at least one silicon-vacancy impurity center (SiV).

12. The ultralocal optical temperature measurement device according to claim 6, **characterized in** the nanometer size of the diamond particle from 50 to 1000 nm.

13. A nanodiamond probe used in the device according to claim 6 with a glass capillary inside where active particles are located, **characterized in** selecting a pre-calibrated diamond nanoparticle as the active particle, located at the end of the glass capillary, and containing at least one impurity center.

14. The nanodiamond probe according to the claim 13, **characterized in** the shape of the glass capillary made as a hollow cylindrical glass container tapering at one end.

15. The nanodiamond probe according to the claim 13, **characterized in** selecting the diameter of the glass capillary (dcapillary) taking into account the size of the embedded diamond particles (ddiamond), in accordance with the expression ddiamond ≤ dcapillary ≤ 3 •ddiamond.

16. The nanodiamond probe according to the claim 13, **characterized in** a diamond particle embedded at the tapered end of a glass capillary made of an aqueous suspension with diamond particles.

17. The nanodiamond probe according to the claim 13, **characterized in** the glass capillary made of borosilicate glass.
